# EUROPEAN PATENT APPLICATION

(11) **EP 1 256 371 A1**
(43) Date of publication of application: **13.11.2002**
(21) Application number: 01201735.6
(22) Date of filing: 10.05.2001
(51) Int. Cl.: B01D 61/12, B01D 61/06, B01D 61/10, C02F 1/44

(54) **Method for purification of water**

(71) Applicant: Van de Lageweg, Wiebe Yde, 9025 BR Beers (NL)
(72) Inventor: Van de Lageweg, Wiebe Yde, 9025 BR Beers (NL)
(74) Representative: Jorritsma, Ruurd

(57) **Abstract**

The present invention is for method and means for purification of water by reverse osmosis where water is forced through an element (1) which comprises a membrane and is located inside a pressure container (2) giving a permeate outflow (14) and a reject outflow (10). The incoming water (3) is supplied at a constant volume flow and that a controlled fraction thereof as a controlled partial volume flow (permeate) (14) is forced through the membrane. The apparatus to be used by the method may comprise a first flow generating means (5) being a positive displacement pump, a second flow generating means (7) being a turbine pump and third flow generating means (9) being a high flow impeller pump. The impellers, pump wheels or corresponding parts of all of the flow generating means (5,7,9) are mounted directly to a common shaft (11).

## Description

The present invention is for method and means for purification of water by reverse osmosis.

It is one object of the present invention to advise a method for purification of water by reverse osmosis by maintaining conditions of operation according to the method which at a constant volume flow produces a flow of product water, which by reverse osmosis is named permeate, which is independent of the prevailing osmotic pressure or the temperature of the water or other flow limiting factors, i. e. the polarisation concentration, scaling, fouling etc. It is another object of the invention to advise a means for use by the method All the conventional systems which are known in the prior art and use the principle of reverse osmosis produce a product flow which varies very much both with the temperature (direct proportionality) and with the salt content of the supply water (reverse proportionality) which determines the osmotic pressure which when increased causes a decrease of the net driving pressure (the difference between the pressure of the system and the osmotic pressure given by the salt content). There are also other flowing limiting factors. All together this brings with it that one and the same configuration of of a conventional purifier always produces different flows when the salt content or the temperature of the incoming water is changed. With the method of the present invention all these flow limiting factors are eliminated and the purified water is produced at a constant flow rate.

The method for purification of water by reverse osmosis comprises forcing pressurised water through a member including an osmotic membrane as per se is known in the art but bringing this about by keeping the inflow constant by means of a volume flow pump which always gives the same volume per unit time, i.e. the same flow but in case of increased resistance to the flow the pressure is increased and vice versa but the flow remains constant.

It is a known fact that the load of a given membrane, i.e. the water which is supplied to and forced through the membrane, the permeate flow, is much dependent upon the temperature of the water and the pressure force. All manufacturers data are given for a reference temperature of 25 °C. Lowering of the temperature to about 10 °C usually means that the permeate flow is halved.

The driving force, strictly speaking the net driving force, is the difference between the system pressure and the osmotic pressure which is determined by and is a function of the concentration of all the substances- both inorganic and organic - which are present in the water adjacent to the surface of the membrane. As the quantity of produced water increases, i.e, as the water permeates through the membrane, almost all (in most cases more than 99 %) of these substances remain at the upstream side of the membrane and as the concentration increases the osmotic pressure is increased, the net driving force is reduced and consequently the permeate flow is reduced. If the equipment is moved and the supplied water has a different concentration of substances then the concentration at the surface of the membrane will change. This change brings with it a change of the osmotic pressure and thus a change of the net driving pressure resulting in a different permeate flow. If the concentration of substances of the inflow of water is increased the osmotic pressure is increased and when it gets close to the pressure of the system then the net driving pressure and the permeate flow is reduced or the flow stops.

By the method of purifying water according to the invention there is a constant flow of produced permeate independent of the temperature and the existing osmotic pressure as the system pressure and consequently the net driving pressure are adapted to the existing conditions.

By applying the flow means and propelling these in dependence of each other in accordance with the invention the relation between the supplied amount of water and the amount of reject water is fixed. All the substances which have been rejected by the membrane are in the reject water. The quotient between the reverse, reciprocal relation above gives the water efficiency or the water yield.

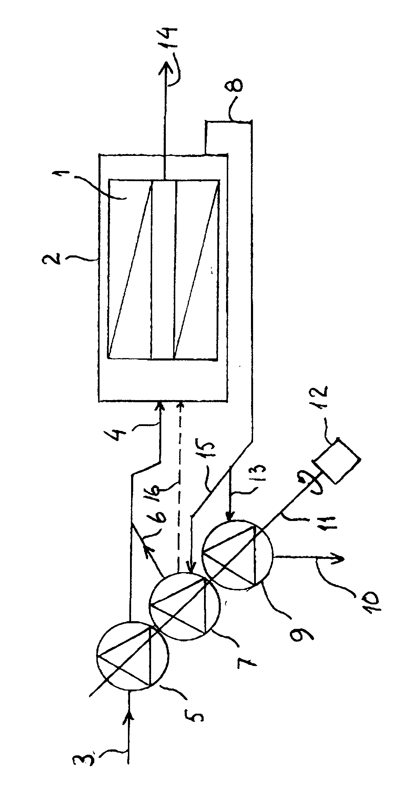

The invention will below be described more in detail with reference to the example below and the accompanying drawing.

The water yield shall have a defined relation to the circulating flow so that the border layer at the surface of the membrane is reduced. In the border layer there are those substances which have been rejected from the water which has passed through the membrane giving the product water flow or permeate which is taken out through the conduit 14. By putting the flow propelling means 5, 7 and 9 on to a common driving shaft 11 it is achieved that the relation between the amount of supplied water 3 and reject water 10, containing the rejected substances, is fixed. It is then achieved that the so called polarisation concentration can be controlled by keeping the circulating flow at a proper level and so control and avoid or reduce the risks for scaling (precipitates block or plug the membrane) or fouling (biofilm growth on the surface of the membrane). The theoretical computations are based upon ideal conditions where the flow of product water is infinitesimal or as close to nil as possible. In practice one desires to have test results as close to ideal conditions as possible and one accepts a low water yield, usually around 5 %. Commercial unit operate at less than 50 % water efficiency. According to the method of the invention the units operate with an extremely high water efficiency of up to 80 % and using water of low salt concentration (salt content below 100 mg/l) a continuous water yield of 90 % has been maintained. This means that at the outlet end 90 % of the supplied water has passed through the membrane and the conditions are in disagreement with the continuity requirement. The effects of this loss is compensated by arranging for recirculation and thereby compensate for the loss of water and maintain the flow speed of the water at the surface of the membrane. As shown in the figure there is an element 1 made from membrane and placed into a container 2. The water 3 which is to be purified is supplied at constant volume flow and increased pressure by the flow means 5 either by a conduit 4 directly to the container or together with the flow from a second flow means 7. The outflow from the second flow means 7 is either taken through the conduit 6 to be mixed with the incoming water or taken directly to the container via the conduit 16. The inflow to the flow means 7 is water which via the conduit 15 is returned from the outlet 8 of the container. Some of the water from the outlet of the container is supplied through the conduit 13 to a flow generating means 9 which at a fixed, predetermined proportion of the supply water deviates a constant reject water flow 10.

By mounting the flow generating means 5, 7 and 9 on a common driving shaft 11 the relation between the amount of water 3 supplied by the means 5 and the deviated amount of water 10, containing the rejected substances, is fixed. The shaft 11 is driven by a motor 12 at a regulated speed so that the flow of permeate is regulated and controlled.

Example. The purifier is to produce 6 litres of purified water per minute. This requires a high rate membrane with a surface of about 5 m². If the purifier is to give a yield of water of 50 %, the inflow is 12 litres per minute and the circulating flow is of the same magnitude. The purification efficiency, will be 90-95 %, for the highest quality membranes above 99%.

## Claims

1. Method for purification of impure water by reverse osmosis where water is forced through an element which comprises a membrane and is located inside a pressure container giving a permeate outflow and a reject outflow **characterized in that** incoming water is supplied at a constant volume flow and that a controlled fraction thereof as a controlled partial volume flow (permeate) is forced through the membrane.

2. Method according to claim 1 **characterized in that** the controlled partial volume flow through the membrane (the permeate flow) is achieved by controlling the incoming volume flow and the reject volume flow.

3. Method according to claim 1 or 2 **characterized in that** a controlled fraction of the reject is recirculated over the membrane.

4. Apparatus for purification of impure water by reverse osmosis where water is forced through an element which comprises a membrane (1) and is located inside a pressure container (2) giving a permeate outflow and a reject outflow where incoming water is supplied at a constant volume flow and a controlled fraction thereof as a controlled partial volume flow (permeate) is forced through the membrane **characterized in that** the incoming flow is obtained by a first flow generating means (5) being a positive displacement pump.

5. Apparatus according to claim 4 **characterized in that** the reject flow is obtained by a second flow generating means (7) being a turbine pump.

6. Apparatus according to claim 5 **characterized in that** the recirculated flow is obtained by a third flow generating means (9) being a high flow impeller pump.

7. Apparatus according to any of claims 5 or 6 **characterized in that** all the flow generating means are driven, directly or via invariable connecting means, by the same engine (12) or other means having an outgoing rotating shaft (11).

8. Apparatus according to claim 7 **characterized in that** the impellers, pump wheels or corresponding parts of all of the flow generating means are mounted directly to a common shaft (11).

9. Apparatus according to any of the claims 4-8 **characterized in that** the rotational speed of the driving engine or motor is variable.
